# EUROPEAN PATENT SPECIFICATION

(11) **EP 1 959 746 B1**
(45) Date of publication and mention of the grant of the patent: **12.08.2009**
(21) Application number: 06820063.3
(22) Date of filing: 20.11.2006
(51) Int. Cl.: A23C 9/13, A23D 7/00, A23D 9/00, A23L 1/29, A23L 1/30

(54) **IMPROVED FAT COMPOSITION**
VERBESSERTE FETTZUSAMMENSETZUNG
COMPOSITION DE GRAISSE AMELIOREE

(30) Priority: 18.11.2005 FI 20051184
(43) Date of publication of application: 27.08.2008
(73) Proprietor: Raisio Oyj, 21201 Raisio (FI)
(72) Inventor: WESTER, Ingmar, FI-20810 Turku (FI); PIISPA, Eija, FI-21530 Paimio (FI)
(74) Representative: Svensson, Johan Henrik
(86) International application number: PCT/FI2006/000382
(87) International publication number: WO 2007/057511

(56) References cited:
- EP-A2- 0 815 735
- EP-A2- 0 962 150
- WO-A-00/04887
- DE-A1- 19 750 453

## Description

### Field of Invention

The invention relates to a fat compositions with improved health and a food product, nutritional supplement and pharmaceutical product comprising the fat composition. The invention also relates to a method for improving the reduction of postprandial lipemia.

### Background of the Invention

Fats oils and other food products, with added plant sterols and/or are already widely available on the commercial market and are used for their serum cholesterol lowering effect. Mainly foods with fatty acid esters of plant stanols and sterols are used, but also free sterols are currently utilised in certain food products such as yoghurts and orange juice. Dairy low-fat or fat-free products containing plant sterol and/or stanols are commercially available. Other commercially successful food products enriched with plant sterols and/or stanols are vegetable oil based spreads and margarines. These are typically based on fat blends based on different vegetable oils, such as rapeseed oil, sunflower oil, olive oil or soybean oil in combination with some hard fats for ensuring right spreadability, sensors properties and product equality of the spreads.

EPA 0 815 735 A disclose a dietetically balanced milk product containing a mixture of lipids of lactic origin and vegetable origin, which product contains lipids in which the fatty acids of the triglycerides comprise, by weight, 20 to 40% of saturated fatty acids of predominantly lactic origin, 35 to 60% of monounsaturated fatty and 15 two 30% of polyunsaturated fatty acids of the n-3 and n-6 families, the weight ratio of fatty acids of the n-6 family to those of the n-3 family being 5:1 to 10:1.

EP 828 434 discloses fat based food products such as spreads containing sterol ester and having at least 30 % PUFA-rich triglycerides. Conventional vegetable oils such as sunflower oil, soybean oil and rapeseed oil are mentioned as being used as PUFA-rich triglycerides.

EP 1 102 591 the synergistic effect of plant sterols and n-3 fatty acids on reducing the risk for CVD, e.g, by reducing the serum cholesterol level, In the description exemplifies sources of n-3 fatty acids are soybean oil and marine oil, such as fish oil.

In e.g. publications EP 982 315, EP 1 004 594, EP 1 028 733 and EP 1 211 955 the fatty acid part of the plant sterol and stanol fatty acid esters are modified. EP 982 315 discloses stanol ester having DHA as fatty acid. In EP 1 004 594 sterol and stanol ester having fatty acids C18-22 with at least three double bonds are disclosed. EP 1 028 733 discloses plant sterol and/or stanol esters of conjugated fatty acids and EP 1 211 955 discloses plant sterol and/or stanol esters of n-3 fatty acids,

Dietary fat plays a significant role in the maintenance of health and well-being. The consumption of saturated fatty acids, especially lauric acid and myristic acid, both found in palm and coconut oil, palmitic acid from palm oil and animal fat is associated with increased risk of cardiovascular disease, while the consumption of monounsaturated fatty acids, especially oleic acid found in olive, rapeseed and sunflower oils, and polyunsaturated fatty acids (PUFAs) from e.g. corn, safflower, soybean and sunflower oils may decrease the risk of cardiovascular disease. The role of individual PUPA classes (i.e. n-3 and n-6) on health has also been acknowledged.

Linoleic acid (LA) and α-linolenic acid (or sometimes called only linolenic acid; ALA) are the two essential fatty acids necessary for many body functions including growth and maintenance of cell membranes. They are called essential because they can not be produced by the body. Thus the only way of obtaining these essential fatty acids is from the diet.

Linoleic acid (LA) is an unsaturated fatty acid with two double bonds (C18:2) common in plants. Evening primrose oil contains about 80 % of its total fatty acid content as linoleic acid. Sunflower oil contains about 65 %, hemp oil about 60 %, soybean oil about 55 %, and linseed oil about 15 % linoleic acid. The human body synthesises another important fatty acid from linoleic acid called gamma-linolenic acid (GLA). GLA is also found in nature in minor amounts e.g. in blackcurrant seed oil.

ALA (a-linolenic acid) is an unsaturated fatty acid with three double bonds (C18:3), and it is found in vegetable oils. Only a few seeds of higher plants have substantial contents of this essential fatty acid: linseed (about 60 %), perilla (about 55 %), camelina (about 38 %), hemp (about 20 %), canola or rapeseed (about 10 %) and soybean (about 10 %).

The PUFAs are also grouped according to the number of the carbon atom on which the first double bond occurs starting with the methyl end of the fatty acid molecule into n-3 and n-6 fatty acids. Linoleic acid (LA) and arachidonic acid (AA) are n-6 fatty acids. AA is found in nature in very small amounts and the health impact from an oral intake is therefore of no practical importance.

N-3 fatty acids found in nature can still be divided into two different categories, long chain n-3 fatty acids (having at least 20 carbon atoms) and ALA. Long-chain n-3 fatty acids contain usually 20 or 22 carbons and more than 3 double bonds. Most common long chain n-3 fatty acids are the marine long chain n-3 fatty acids EPA (eicosapentanoic acid) and DHA (docosahexanoic acid) that can be found in algae, crustaceans, and in fish oil.

Mammals can use LA to metabolise other fatty acids from the n-6 group and ALA to metabolise those of the n-3 group, but cannot convert fatty acids between the two groups.

### Summary of the Invention

In Western diet the intake of n-6 fatty acids is generally too high and the intake of n-3 fatty acids is too low. This means that the balance of n-6 to n-3 fatty acids in the diet is high (too much n-6 fatty acids in the diet). The imbalance means that metabolisation of linoleic acid versus ALA is favourable to linoleic acid and the amount of n-6 metabolites is elevated (high) in our body. As ALA competes for the same key enzyme in the elongation of fatty acids (delta-6-desaturase) an imbalance between linoleic acid and ALA in our diet is reflected in an imbalance between metabolites of linoleic acid and ALA in our body, which may induce the risk of many chronic diseases. As one consequence the amount of AA (arachidonic acid) is elevated in blood, cell membranes, tissues and important lipid sub-classes of tissues such as phospholipids. AA is known to play an important role in the inflammation process (as the precursor of the proinflammatory eicosanoids and leucotrienes e.g. prostaglandin E2 and leucotriene B4) and by lowering its concentration in cell membranes and body tissues the prevalence and severity of eicosanoid related disorders, including atherosclerotic complications and inflammations, can also be reduced. If n-3 addition to the diet is made by using long chain n-3 fatty acids such as EPA and DHA, the amount of AA in the body can not be lowered. The amount of AA that is metabolised in our body from linoleic acid can practically only be lowered by changing the balance of linoleic acid (n-6) and ALA (n-3) in the diet.

By changing the ratio between n-3 and n-6 to n-3 position the metabolism of ALA to long chain n-3 fatty acids such as EPA and DHA can be promoted. The dietary intake of EPA and DHA is known to have a lot of different positive effects on health. They are found in marine oils, such as fish oil. However, the use of fish oil in food products is problematic due to its poor stability against oxidation, which causes a strong unpleasant taste of the product. N-3 eicosanoids (metabolites produced by the body from n-3 fatty acids such as biologically active compounds e.g. hormone-like compounds) have important effects on physiological processes like platelet aggregation, vascular constriction and immune cell function. Therefore, ALA can be used as a starting fatty acid for these n-3 eicosanoids instead of EPA and DHA if the intake of n-6 fatty acids is not too high.

When the balance is moved towards n-3 fatty acids, and especially towards metabolising ALA more effectively the amount of AA is reduced as well as the metabolites derived from AA. This may reduce the risk for inflammations caused by e.g. prostaglandin E2 and/or leucotriene B4.

This invention discloses edible fat compositions with improved health effects.

It was found that a fat composition with a specified ratio of n-3 to n-6 fatty acids containing at least 60 % by weight of ALA of the total n-3 fatty acids and including plant sterol and or stanol is beneficial for healthy reasons.

It now seems that the combination of plant sterols and/or stanols and an absorbable fat component having a certain amount of eicosenoic acid has a favourable impact on postprandial lipemia.

The improved reduction of postprandial lipemia leads to reduction of the risk for metabolic syndrome, which is one of the main risk factors for type 2 diabetes. In addition postprandial lipemia is a risk factor for cardiovascular diseases. This effect can be obtained by using the fat compositions, food products, nutritional supplements or pharmaceutical products according to the invention.

The reduction of postprandial lipemia is improved by providing a preferred absorbable fat component in which the weight ratio of n-3 fatty acids to n-6 fatty acids is 0.6:1-5:1.

It has now further been found that food products containing plant sterols and/or stanols and a fat composition having a high enough amount of ALA compared to marine long chain n-3 fatty acids, in combination with a certain amount of eicosenoic acid (C20:1) effectively lowers serum total and LDL cholesterol levels while simultaneously reducing the blood and tissue levels of AA and enhancing the metabolism of ALA. Thus as a consequence the products provide a solution for reducing the risk of many diseases such as cardiovascular disease and/or type 2 diabetes and/or inflammations.

It was further found that intake of eicosenoic acid and ALA with reduced intake of linoleic acid was beneficial for healthy reasons.

One aim of this invention is to minimise or avoid the use of dietary fish oils because of their drawbacks concerning oxidation and off-taste but to still obtain corresponding beneficial physiological effects in the body as obtained by EPA, DHA and.other long chain n-3 fatty acids. In addition to long chain n-3 fatty acids certain fish oils, such as cod liver oil and fat of herring, contain high amount of eicosenoic acid, C20:1 which is present at low levels also in vegetable oils of food grade. Camelina oil differs from many vegetable oils as it contains a higher amount of C20:1 fatty acid, and in addition it has a high ALA content. In fish oils C20:1 is present together with long chain n-3 fatty acids which are not useful when there is a need to change the ratio of n-3 and n-6 fatty acids in the first metabolising step of n-3 and n-6 fatty acids (ALA and linoleic acid are the first fatty acids in the metabolic pathways of n-3 and n-6 fatty acids). This ratio needs to be changed to prevent high amounts of arachidonic acid in the body.

### Definitions

As used here, the term "plant sterol and/or stanol" refers to any sterol or/stanol as defined in the following and having lipid profile improving effect. Plant sterols and/or stanols can be either in free form or as esters or as mixtures of both forms. Optionally any derivative of plant sterol and/or stanol having lipid profile improving effect may be used. As used here, the term "plant sterol and/or stanol ester" refers to plant sterols and/or stanols having at least 60 %, preferably at least 85 %, most preferably at least 95 % of the plant sterols and/or stanols in esterified form. The acid part of the ester is preferably a fatty acid (2-24 carbon atoms; saturated, monounsaturated or polyunsaturated, including linoleic acid and ALA as well as special fatty acids such as conjugated fatty acids, e.g. CLA, and EPA and DHA), but also di- or tricarboxylic acids and/or hydroxy acids or any combination of the said acids may be used.

In this specification the plant sterols include 4-desmethyl sterols such as sitosterol, campesterol, stigmasterol, brassicasterol, 22-dehydrobrassicasterol, Δ5-avenasterol and the plant stanols include 4-desmethyl stanols such as sitostanol, campestanol and their 24-epimers. The definition "plant sterol and/or stanol" includes all possible natural blends or any mixtures containing named sterols and/or stanols as well as any individual sterol or stanol.

The amounts of plant sterols and/or stanols in this specification are calculated as sterol equivalents i.e. as the amount of free plant sterol and/or stanol.

Commercially available plant sterols and/or stanols in their free or esterified form can be used as such and especially the esters are easily added to fats. When plant sterols and/or stanols in their free form are used there are many known ways of incorporating them into fat e.g. by using a convenient particle size, emulsifiers and/or stabilisers. Heating is also usually needed.

Preferably the plant sterol and/or stanol is esterified and most preferably it is a plant sterol and/or stanol fatty acid ester. The fatty acid ester is technically very suitable for incorporation into a wide range of different products and is especially preferred as it has very good organoleptic properties, enabling production of the composition of the present invention with good organoleptic properties. Also the bioavailability of the sterol and/or stanol fatty acid esters is very good.

Preferably plant stanol is used because its absorption is negligible and using it is therefore safer. Also the cholesterol lowering effect seems to be both stronger and longer with plant stanols. Most preferred are therefore the plant stanol fatty acid esters for use in the composition according to the invention.

Stanol fatty acid ester and the effects thereof, as well as a suitable method for its preparation, are disclosed e.g. in US 6 174 560.

"N-3 fatty acids" include ALA, EPA and DHA and some longer n-3 fatty acids that exist in smaller amounts in nature. In this invention ALA is the preferred n-3 fatty acid as it is practically the only one found in vegetable oils. Other n-3 fatty acids found in vegetable oils in minor amounts are for example C20:3 n-3 and C22:3 n-3 fatty acids that can be found e.g. in camelina oil in amounts of less than 5 % by weight.

Vegetable n-3 fatty acids are n-3 fatty acids from vegetable origin.

Marine long chain n-3 fatty acids refer to EPA (C20:5) and DHA (C22:6) that are n-3 fatty acids generally found in fish oil.

"N-6 fatty acids" include linoleic acid, arachidonic acid, γ-linolenic acid. In this invention the linoleic acid is the most preferred.

Eicosenoic acid is a C20:1 fatty acid found in nature in e.g. camelina oil (about 15 %), borage oil (2-4 %), and fish oil, especially cod liver oil (about 12 %). Small amounts can be found in many vegetable oils. In addition to camelina oil there may be other sources of C20:1 fatty acid or the fatty acid might be produced e.g. by genetic modification.

The term "absorbable fat component" includes all sources of fatty acids that can be absorbed by the body e.g. free fatty acids, mono-, di- and triglycerides, as well as the fatty acid part of the plant sterol and/or stanol ester, but not the plant sterol and/or stanol itself.

The edible fat composition must be of food grade. This means e.g. that there should not be more than 5 % by weight of erucic acid C22:1 in the edible fat composition which amount is generally accepted as low (e.g. low erucic acid rapeseed).

### Detailed Description of the Invention

According to the present invention there is provided an edible fat composition comprising from 1.5 to 90 % by weight plant sterol and/or stanol calculated as sterol equivalents and from 10 to 98.5 % by weight of an absorbable fat component comprising from 0.05 to 60 % by weight eicosenoic acid based on the edible fat composition and a weight ratio of n-3 fatty acids to n-6 fatty acids from 0.6:1 to 5.0:1.

Typically the composition comprises at most 10 % by weight, preferably at most 5 % by weight, more preferably at most 3 % by weight, even more preferably at most. 1% by weight marine long chain n-3 fatty acids of the total n-3 fatty acids, and most preferably the fat composition comprises no marine long chain n-3 fatty acids.

The amount of marine long chain fatty acids should not be too high in the fat composition according to the invention, because when it is too high LA is effectively metabolised into AA. However, the vegetable long chain n-3 fatty acids are believed not to interfere with the ALA and LA metabolism. Therefore, they may be included in the fat composition according to the invention.

Typically the amount of eicosenoic acid can be at least 0.10 %, for example at least 0.15 %, preferably at least 0.20 %, for example at least 0.25 %, more preferably at least 0.30 %, for example at least 0.35 %, even more preferably at least 0.40 %, for example at least 0.50 %, still more preferably at least 0.6 %, for example at least 0.7 %, even still more preferably at least 0.8 %, for example at least 0.9 %, most preferably at least 1.0 %, for example at least 1.5 %, even most preferably at least 2.0 %, for example at least 2.5 %, and still even most preferably at least 3.0 %, for example at least 3.5 %, further more preferably at least 4.0 %, for example at least 4.5 %, and most preferably at least 5.0 % by weight of the edible fat composition.

Typically the amount of eicosenoic acid can be at most 50 %, preferably at most 40 %, more preferably at most 30 %, even more preferably at most 20 %, still more preferably at most 15 % and most preferably at most 10 % by weight of the edible fat composition.

Preferably the edible fat composition comprises from 1 to 90 %, more preferably from 2 to 80 %, even more preferably from 3 to 70 % and most preferably from 4 to 60 % by weight alpha-linolenic acid. More preferred is that the edible fat composition comprises at least 5.0 %, for example at least 6.0 %, still more preferred at least 7.0 %, for example at least 8.0 %, even more preferred at least 9.0 %, for example at least 10.0 %, still even more preferred at least 11.0 %, for example at least 12.0 %, most preferably at least 13.0 %, and even most preferably at least 14.0 % by weight alpha-linolenic acid. Preferably the upper limit is at most 50 % by weight, more preferably at most 40 % by weight, and most-preferably at most 35 % by weight.

Typically at least 50 % by weight, preferably at least 60 % by weight, more preferably at least 70 % by weight, even more preferably at least 80 % by weight, still more preferably at least 90 % by weight and most preferably at least 95 % by weight of the n-3 fatty acids comprise alpha-linolenic acid, and even most preferably the n-3 fatty acids comprise only alpha-linolenic acid.

The absorbable fat component, as well as the edible fat composition, may have a weight ratio of n-3 fatty acids to n-6 fatty acids from 0.7:1 to 5.0:1, more preferably from 0.8:1 to 4.5:1 and most preferably from 0.9:1 to 4.0:1. The ratio is preferably at least 0.9:1, more preferably at least 1.0:1, still more preferably at least 1.1:1, even more preferably at least 1.2:1, still even more preferably at least 1.5:1, most preferably at least 1.8:1, and even most preferably at least 2.0:1, and on the other hand, preferably at most 4.8:1, more preferably at most 4.5:1, still more preferably at most 4.2:1, even more preferably at most 4.0:1, and most preferably at least 3.8:1. As the main component of the n-3 fatty acids in the edible fat composition according to the invention preferably is ALA and the main component of the n-6 fatty acids is LA the n-3 to n-6 ratio is preferably calculated as the ratio of ALA to LA.

The amount of plant sterol and/or stanol in the edible fat composition may be from 1.5 to 65 % by weight, preferably from 2.0 to 60 % by weight, more preferably from 3.0 to 60 % by weight, and most preferably from 5.0 to 50 % by weight.

If the plant sterol and/or stanol is partly or fully provided as fatty acid esters these fatty acids form part of the absorbable fat component. The fatty acids of the sterol and/or stanol ester can preferably be derived from linseed oil, camelina oil, perilla oil or other vegetable oils having ALA and linoleic acid in proportions which give the required ratio of n-3 to n-6 fatty acids to the edible fat composition and food product. Optionally, n-3 fatty acids can be enriched to the fat composition and food product by using vegetable oils that have a high content of ALA, such as camelina oil, linseed oil or perilla oil or other oils having ALA and linoleic acid in proportions which give the preferable ratio of n-3 to n-6 fatty acids to the fat composition and food product. Then there is no need for the plant sterol and/or stanol ester to contain any ALA and it can be made e.g. instance of olive oil fatty acids, or the commercial plant sterol ester made of soybean oil fatty acids or plant stanol ester made of rapeseed oil fatty acids may be used. Also the eicosenoic acid may be provided either in the plant sterol and/or stanol esters or in the triglyceride based fat, or in both.

Plant sterols and/or stanols are known to effectively reduce serum total and LDL cholesterol levels, while serum HDL and triacylglycerols remain unchanged. An increased use of ALA (a-linolenic acid) is desired as the West Europeans diets typically contain too much linoleic acid. In one aspect this invention is based on the finding that a food products containing plant sterols and/or stanols and an edible fat composition with a set ratio of n-3 to n-6 fatty acids having a high amount of ALA compared to marine long chain n-3 fatty acids in combination with a certain amount of eicosenoic acid effectively lower serum total and LDL cholesterol levels, while it simultaneously reduces the blood and tissue levels of AA and enhances the metabolism of ALA resulting in enhanced blood and tissue levels of ALA derived eicosanoids. Thus as a consequence the products of this invention provide a solution for an enhanced reduction of the risk of many diseases such as cardiovascular disease and/or type 2 diabetes.

It has been found that the combination of plant sterols and/or stanols and a fat component having a certain amount of eicosenoic acid has a favourable impact on postprandial lipemia. Postprandial lipemia can be described as how fast absorbed fat is cleared from the blood stream after a meal. The faster the fat is cleared from the blood the better. Plant stanol esters did not reduce postprandial area under the curve concentrations of triacylglycerol in serum, chylomicron or very low density lipoproteins. (Relas et al., British Journal of Nutrition 2001; 85:141-147). The fat-load studies with and without stanol ester was conducted after a 12 hour fasting in 10 healthy men. When a similar acute oral fat loading test was conducted it was surprisingly found that the combination of plant stanol ester and camelina oil exerted a measurable further reduction in the area under curve concentration of triacylglycerol in serum as compared to the plant stanol ester and camelina oil alone.

It is further believed that a diet or edible fat composition containing eicosenoic acid and the same amounts of linoleic acid and ALA enhances the metabolism of ALA resulting in enhanced levels of ALA derived eicosanoids in plasma and blood phospholipids.

Typically the n-3 fatty acids of the absorbable fat component comprise at least 60 % by weight, preferably at least 70 % by weight, more preferably at least 80 % by weight, even more preferably at least 90 % by weight and still more preferably at least 95 % by weight of vegetable n-3 fatty acids and most preferably the absorbable fat component comprises only vegetable n-3 fatty acids.

Typically the n-3 fatty acids of the absorbable fat component comprises 0-10 % by weight marine long chain n-3 fatty acids, 60-100 % by weight alpha-linolenic acid, and 0-40 % by weight other vegetable n-3 fatty acids than alpha-linolenic acid. Preferably the amounts are as mentioned in this specification for the marine long chain n-3 fatty acids and for the alpha-linolenic acid, the rest being other vegetable n-3 fatty acids than alpha-linolenic acid.

Typically at least 60 %, preferably at least 70 %, more preferably at least 80 %, still more preferably at least 90 %, even more preferably at least 95.0 % and most preferably at least 98.0 % by weight of the absorbable fat component comprises triglycerides and/or plant sterol and/or stanol fatty acid esters.

The weight ratio of n-3 fatty acids to plant sterol and/or stanol may be 0.08:1-40:1, preferably 0.08:1-6:1, more preferably 0.09:1-5:1, still more preferably 0.1:1-5:1, even more preferably 0.15:1-5:1, still even more preferably 0.2:1-5:1 and most preferably 0.2:1-2:1.

In a preferred embodiment at least a part of the eicosenoic acid and at least a part of the n-3 and n-6 fatty acids are provided in the composition as camelina oil. Preferably the absorbable fat component comprises at least 5 %, preferably at least 10 %, more preferably at least 25 %, still more preferably at least 35 %, even more preferably at least 50 %, still even more preferably at least 70 % by weight camelina oil, and on the other hand, at most 100 %, preferably at most 97 % and more preferably at most 95 % by weight of camelina oil.

The present invention also provides a food product comprising an edible fat composition as defined above and at least one nutritional component. A nutritional component is any food grade component that can be used for preparing a food product.

The food product may be one of following: beverages, such as soft drinks, and juices, dairy products, such as milk, cheeses, ice cream and yoghurt, non-dairy products, such as soy or oat based drinks and products made thereof, fat based products, such as margarines, spreads, mayonnaise, shortenings, cooking oils and dressings, and cereal-based products, such as bread, biscuits and pastas.

The present invention additionally provides a nutritional supplement or a pharmaceutical product comprising an edible fat composition as defined above.

The nutritional supplement or pharmaceutical product is preferably in the form of capsule, especially a gelatin capsule.

The present invention also relates to an edible fat composition comprising an absorbable fat component comprising from 0.05 to 60 % by weight eicosenoic acid based on the edible fat composition and n-3 fatty acids and n-6 fatty acids at a weight ratio from 0.6.1, to 5.0:1 for use for reducing postprandial lipemia and/or for reducing the risk for type 2 diabetes and/or reducing the risk for cardiovascular diseases and/or for lowering blood total and/or LDL cholesterol and/or for improving blood HDL cholesterol and/or for reducing the risk for inflammations, especially for reducing postprandial lipemia.

In the following the preferable embodiments of the compositions to be used are defined.

Typically the composition to be used comprises at most 10 % by weight, preferably at most 5 % by weight, more preferably at most 3 % by weight, even more preferably at most 1 % by weight marine long chain n-3 fatty acids of the total n-3 fatty acids, and most preferably the fat composition comprises no marine long chain n-3 fatty acids.

Typically the amount of eicosenoic acid can be at least 0.10 %, for example at least 0.15 %, preferably at least 0.20 %, for example at least 0.25 %, more preferably at least 0.30 %, for example at least 0.35 %, even more preferably at least 0.40 %, for example at least 0.50 %, still more preferably at least 0.6 %, for example at least 0.7 %, even still more preferably at least 0.8 %, for example at least 0.9 %, most preferably at least 1.0 %, for example at least 1.5 %, even most preferably at least 2.0 %, for example at least 2.5 %, and still even most preferably at least 3.0 %, for example at least 3.5 %, further more preferably at least 4.0 %, for example at least 4.5 %, and most preferably at least 5.0 % by weight of the edible fat composition.

Typically the amount of eicosenoic acid can be at most 50 %, preferably at most 40 %, more preferably at most 30 %, even more preferably at most 20 %, still more preferably at most 15 % and most preferably at most 10 % by weight of the edible fat composition.

Preferably the edible fat composition comprises from 1 to 90 %, more preferably from 2 to 80 %, even more preferably from 3 to 70 % and most preferably from 4 to 60 % by weight alpha-linolenic acid. More preferred is that the edible fat composition comprises at least 5.0 %, for example at least 6.0 %, still more preferred at least 7.0 %, for example at least 8.0 %, even more preferred at least 9.0 %, for example at least 10.0 %, still even more preferred at least 11.0 %, for example at least 12.0 %, most preferably at least 13.0 %, and even most preferably at least 14.0 % by weight alpha-linolenic acid. Preferably the upper limit is at most 50 % by weight, more preferably at most 40 % by weight, and most preferably at most 35 % by weight.

Typically at least 50 % by weight, preferably at least 60 % by weight, more preferably at least 70 % by weight, even more preferably at least 80 % by weight, still more preferably at least 90 % by weight and most preferably at least 95 % by weight of the n-3 fatty acids comprise alpha-linolenic acid, and even most preferably the n-3 fatty acids comprise only alpha-linolenic acid.

The absorbable fat component, as well as the edible fat composition, may have a weight ratio of n-3 fatty acids to n-6 fatty acids from 0.7:1 to 5.0:1, more preferably from 0.8:1 to 4.5:1 and most preferably from 0.9:1 to 4.0:1. The ratio is preferably at least 0.9:1, more preferably at least 1.0:1, still more preferably at least 1.1:1, even more preferably at least 1.2:1, still even more preferably at least 1.5:1, most preferably at least 1.8:1, and even most preferably at least 2.0:1, and on the other hand, preferably at most 4.8:1, more preferably at most 4.5:1, still more preferably at most 4.2:1, even more preferably at most 4.0:1, and most preferably at least 3.8:1. As the main component of the n-3 fatty acids in the edible fat composition according to the invention preferably is ALA and the main component of the n-6 fatty acids is LA the n-3 to n-6 ratio is preferably calculated as the ratio of ALA to LA.

Typically the n-3 fatty acids of the absorbable fat component comprise at least 60 % by weight, preferably at least 70 % by weight, more preferably at least 80 % by weight, even more preferably at least 90 % by weight and still more preferably at least 95 % by weight of vegetable n-3 fatty acids and most preferably the absorbable fat component comprises only vegetable n-3 fatty acids.

Typically the n-3 fatty acids of the absorbable fat component comprises 0-10 % by weight marine long chain n-3 fatty acids, 60-100 % by weight alpha-linolenic acid, and 0-40 % by weight other vegetable n-3 fatty acids than alpha-linolenic acid. Preferably the amounts are as mentioned in this specification for the marine long chain n-3 fatty acids and for the alpha-linolenic acid, the rest being other vegetable n-3 fatty acids than alpha-linolenic acid.

In a preferred embodiment at least a part of the eicosenoic acid and at least a part of the n-3 and n-6 fatty acids are provided in the composition as camelina oil. Preferably the absorbable fat component comprises at least 5 %, preferably at least 10 %, more preferably at least 25 %, still more preferably at least 35 %, even more preferably at least 50 %, still even more preferably at least 70 % by weight camelina oil, and on the other hand, at most 100 %, preferably at most 97 % and more preferably at most 95 % by weight of camelina oil.

Preferably, the edible fat composition still comprises plant sterol and/or stanol and then the edible fat composition corresponds to the composition of the first independent claim and the dependent claims to that.

The present invention further relates to the use of an edible fat composition comprising an absorbable fat component comprising from 0.05 to 60 % by weight eicosenoic acid based on the edible fat composition and n-3 fatty acids and n-6 fatty acids at a weight ratio from 0:6:1 to 5.0:1 for the preparation of a food product, nutritional supplement or pharmaceutical product. The food product, nutritional supplement or pharmaceutical product may be used for reducing postprandial lipemia, and/or for reducing the risk for type 2 diabetes and/or for reducing the risk for cardiovascular diseases and/or for lowering blood total and/or LDL cholesterol and/or for improving blood HDL cholesterol and/or for reducing the risk for inflammations, especially for reducing postprandial lipemia.

The following examples are presented to further illustrate the invention. All percentages referred to in this specification are given as % by weight if not else is mentioned.

### Example 1

### Soydrink made from soybeans

Soybase for soydrink was made by grinding the beans with hot or cold water and water insoluble components were removed. Dry matter content of the soybase was adjusted so that the final drinks contained 0.1, 3 and 5 w-% fat from the beans. Stabilisers, ALA rich oil and stanol ester were added. The fatty acid composition of the drink was adjusted with oil containing a high amount of ALA so that the ratio of n-3 to n-6 fatty acids in the final product was equal to or higher than 0.5:1.0 preferably higher than 0.6:1.0. A fruit preparation was added. Optionally the ingredients can be added in different order. The drink can be flavoured, additional stabilisers, thickening agents, fibres, proteins, carbohydrates, vitamins, minerals and processing aids can be added to obtain drinks with good mouthfeel and nutritional profile. The drink was processed using normal procedure for this kind of product, including for example homogenisation and heat treatment steps such as pasteurisation or UHT-treatment to prepare a stable and homogenous drink. The soybase can also be fermented after which it is processed for example to a pudding or smoothie or a yoghurt-type of product containing above mentioned ALA rich oil, stanol ester, stabiliser and other ingredients.

### Example recipe:

| | |
|---|---|
| 70% | Soybase containing 3 % fat |
| 2% | Camelina oil |
| 4,5 % | Fruit preparation |
| 1% | Stabiliser |
| 1.7% | Stanol ester; fatty acids from rapeseed oil |
| 20.8% | Water |

### Composition data of the soydrink:

N-3 fatty acids (alpha-linolenic acid): 1.00 g / 100 g product
N-6 fatty acids (linoleic acid): 1.55 g /100 g product
Ratio of the n-3 to n-6 fatty acids 0.64 : 1.0
1 g plant stanol equivalents / 100 g product
C20:1 fatty acid 0.30 g /100 g product
amount of C20:1/ fat composition: 5.2 %
amount of ALA/ fat composition: 17.2 %

### Example 2

### Soydrink made from soyprotein isolate or concentrate

The fatty acid composition of the drink was adjusted with oil containing a high amount of n-3 fatty acids so that the ratio of n-3 to n-6 fatty acids in the final product was equal to or higher than 0.5 : 1.0. Stanol ester with fatty acids from rapeseed oil was added. Optionally the amount of n-3 and n-6 fatty acids can be adjusted in the drink using stanol ester that has more or less of these fatty acids esterified to the stanol. The drink can be flavoured, additional stabilisers, thickening agents, fibres, proteins, carbohydrates, vitamins, minerals and processing aids can be added to obtain drinks with good mouthfeel and nutritional profile. The drink is processed using normal procedure for this kind of product, including for example homogenisation and heat treatment steps to prepare a stable and homogenous drink. The soy protein isolate or concentrate based drink can also be fermented after which it is processed for example to a pudding or smoothie or a yoghurt-type of product.

### Example recipe:

| | |
|---|---|
| 3.5% | Soy protein isolate (containing 4 % fat and 90 % protein) |
| 1% | Fruit preparation |
| 1% | Camelina oil |
| 5% | Stabiliser |
| 1.7% | Stanol ester with fatty acids from rapeseed oil |
| 87.8% | Water |

### Composition data of the soydrink:

N-3 fatty acids (alpha-linolenic acid): 0.44 g /100 g product
N-6 fatty acids (linoleic acid): 0.37g /100 g product
Ratio of n-3 to n-6 fatty acids 1.2: 1.0
1g plant stanol equivalents / 100 g product
C20:1 fatty acid 0.15 g/100 g product
amount of C20:1/ fat composition: 5.9 %
amount of ALA/ fat composition: 15.5 %

### Example 3

### Light spread (30 % digestible fat)

The fat composition for the light spread was made of camelina oil, rapeseed oil, hard fat (interesterified blend of palm stearin and coconut oil) and stanol ester with fatty acids from rapeseed oil. The fatty acid composition of the drink was adjusted with oil containing a high amount of n-3 fatty acids (here camelina oil) so that the ratio of n-3 and n-6 fatty acids in the final product was equal to or higher than 0.5: 1.0, preferably higher than 0.6 : 1.0.

### Recipe for the spread:

### Fat soluble ingredients:

| | |
|---|---|
| 12 g | rapeseed oil |
| 5 g | camelina oil |
| 7g | hard fat |
| 13.6 g | stanol ester with fatty acids from rapeseed oil |
| 0.4 g | lecithin |
| 0.3 g | mono- and diglyceride |
| 0.015 g | beta-carotene |
| 0.01 g | fat soluble aroma |

### Water soluble ingredients:

| | |
|---|---|
| 57.075 g | water |
| 3g | gelatine |
| 0.5 g | whey protein concentrate |
| 1 g | salt |
| 0.1 g | potassium sorbate |

Citric acid to adjust pH of the water phase into 5.5

The fat phase and the water phase of the spread were made separately after which the emulsion was formed by adding the water phase to the fat phase using speed that enabled a stable fat continuous emulsion forming. The spread was prepared using a conventional margarine production procedure. Optionally the water phase of the spread may contain other thickening agents (such as pectin or starches), protein sources etc. and the fat phase may contain different emulsifiers, fat composition and other fat soluble ingredients.

### Composition data of the light spread:

N-3 fatty acids (alphalinolenic acid): 3.6 g /100 g product
N-6 fatty acids (linoleic acid): 5.0 g / 100 g product
Ratio of n-3 to n-6 fatty acids 0.67 : 1.0
8 g plant stanol equivalents / 100 g product
C20:1 fatty acid 0.7 g / 100 g product
amount of C20:1/ fat composition: 2.0 %
amount of ALA/ fat composition: 9.5 %

### Example 4

### Margarine having 60 % digestible fat

The fat phase composition for the margarine was made of camelina oil, sunflower oil, hard fat (interesterified blend of palm stearin and coconut oil) and stanol ester with fatty acids from rapeseed oil.

### Recipe for the product

### Fat soluble ingredients

| | |
|---|---|
| 15g | sunflower oil |
| 20 g | camelina oil |
| 19.9 g | hard fat |
| 13.6 g | stanol ester |
| 0.2 g | lecithin |
| 0.3 g | monoglyceride |
| 0.015 g | beta-carotene |
| 0.01 g | fat soluble aroma |

### Water soluble ingredients:

| | |
|---|---|
| 29.475 g | water |
| 0.5 g | milk powder |
| 1 g | salt |

Citric acid to adjust pH of the water phase into 5.5

### Water soluble aroma

The fat phase and the water phase of the spread were prepared separately after which the emulsion was formed by adding the water phase to the fat phase using speed that enabled forming of a stable fat continuous emulsion. The spread was made using a conventional margarine production procedure.

### Composition data of the light spread:

N-3 fatty acids (alpha-linolenic acid): 8.5 g / 100 g product
N-6 fatty acids (linoleic acid): 14.0 g /100 g product
Ratio of n-3 to n-6 fatty acids 0.61 : 1.0
8 g plant stanol equivalents /100 g product
C20:1 fatty acid 3.0 g /100 g product
amount of C20:1/ fat composition: 0.43 %
amount of ALA/ fat composition: 12.3 %

### Example 5

### Low fat yoghurts

The yoghurt was made from fat free milk by conventional yoghurt preparation methods including fermentation and pasteurisation. The product can also be UHT treated to ensure longer shelve-life. When using UHT treatment the product can also be fermented after UHT treatment to ensure living lactic acid bacteria in the product. Stanol ester being rich in omega-3 fatty acids and C20:1 fatty acid was added to the product before the pasteurisation step. Homogenity of the emulsion can be enhanced by using suitable emulsifiers or stabilisers. The yoghurt contained stanol ester rich in n-3 fatty acids (≥ 12.0 % of fatty acids from camelina oil and ≤ 88.0 % of fatty acids from rapeseed oil).

Composition data of the yoghurt containing stanol ester having 12 % fatty acids from camelina oil and 88 % fatty acids from rapeseed oil:
N-3 fatty acids (alphalinolenic acid): 0.12 g /100 g product
N-6 fatty acids (linoleic acid): 0.19 g /100 g product
Ratio of n-3- to n-6 fatty acids: 0.63 : 1.0
1 g plant stanol equivalents / 100g product
C20:1 fatty acid 0.02 g / 100 g product
amount of C20: 1/ fat composition: 1.2 %
amount of ALA/ fat composition: 7.1 %

A yoghurt containing stanol ester having 35 % fatty acids from camelina oil and 65 % fatty acids from rapeseed oil contained:
N-3 fatty acids (alphalinolenic acid): 0.14 g / 100 g product
N-6 fatty acids (linoleic acid): 0.14 g / 100 g product
Ratio of n-3 to n-6 fatty acids 1.0:1.0
1 g plant stanol equivalents / 100 g product
C20:1 fatty acid 0.02 g /100 g product
amount of C20:1/ fat composition: 1.2 %
amount of ALA/ fat composition: 8.4 %

### Example 6

### Oat biscuit

The oat biscuit was made using conventional processing methods used for biscuit making.

### Ingredients are

| | |
|---|---|
| 18.2 g | oat flakes |
| 15 g | wheat flour |
| 15 g | oat bran |
| 9.7 | sugar |
| 7g | wheat starch |
| 4g | fructose |
| 4g | vegetable fat based baking margarine (80% fat) |
| 0.5 g | rye malt |
| 0.4 g | salt |
| 0.8 g | baking powder (E500, E450 and E503) |
| 9g | camelina oil |
| 11g | stanol ester with fatty acids from rapeseed oil |
| 5.4 g | water |

### Composition data of the biscuits:

N-3 fatty acids (alphalinolenic acid): 4.1 g / 100 g product
N-6 fatty acids (linoleic acid): 3.9 g / 100 g product
The ratio of n-3 to n-6 fatty acids 0.95 : 1.0
6.4 g plant stanol equivalents / 100 g product
C20:1 fatty acid 1.3 g / 100 g product
amount of C20:1/ fat composition: 5.2 %
amount of ALA/ fat composition: 15.7 %

### Example 7

### Salad oil

A vegetable oil blend containing stanols and n-3 fatty acids was made by blending stanol ester with refined and deodorised rapeseed oil and cold pressed camelina oil. The fat blend was flavoured with herbs. This kind of fat blend can be used for example in salads as a salad oil or in vegetable frying in pan. Optionally the fat blend can be composed from camelina oil, stanol ester and olive oil / soybean oil / sunflower oil or other vegetable oils. The oil can be flavoured using different kinds of herbs and spices. Unflavoured or flavoured oil blend can be used as a raw material for other kind of salad dressings or mayonnaises.

### Recipe for salad oil:

| | |
|---|---|
| 35 % | stanol ester, fatty acids from rapeseed oil |
| 40% | cold pressed camelina oil |
| 20% | refined and deodorised rapeseed oil |
| 2.5 % | dried basilica |
| 2.5% | dried thyme |

### Composition data of the oil blend:

N-3 fatty acids (alpha-linolenic acid): 18.6 g / 100 g product
N-6 fatty acids (linoleic acid): 12.8 g /100 g product.
The ratio of n-3 to n-6 fatty acids 1.5: 1.0
6.4 g plant stanol equivalents / 100 g product
C20:1 1 fatty acid 6.0 g / 100 g product
amount of C20:11 fat composition: 6.7 %
amount of ALA/ fat composition: 19.6 %

### Example 8

### Clinical test showing postprandial effects of an oil containing C20:1 fatty acid and a specified ratio of n-3 to n-6 fatty acids

15 healthy young adults (age 20-30 years) with mild hypercholesterolemia (total cholesterol 4.0-6,5 mmol/l) were recruited in a double-blind, randomized, and controlled study. Exclusion criteria for the study were obesity (BMI > 30) and any medication.

The subjects ate twice in the morning in a randomized order a standard hamburger meal (total fat load 50 g) with two weeks interval: one contained 25 g olive oil (control) and the other 25 g camelina oil (Camelina). The oils were provided in the form of mayonnaises.

### Recipe of the mayonnaises (% by weight):

| | |
|---|---|
| 50% | olive oil or camelina oil |
| 2.9 % | rapeseed oil |
| 37.5% | water |
| 3.0% | sugar |
| 1.2% | salt |
| 0.1 % | potassium sorbate |
| 2.4 % | acetic acid |
| 2.9 % | emulsifiers, spices, vitamins |

### Composition data of the camelina oil mayonnaise:

n-3 fatty acids: 17.2 g/ 100 g product
n-6 fatty acids: 9.6 g/ 100 g product
Ratio of n-3 to n-6 fatty acids 1.8:1.0
C20:1 fatty acid 7.46 g/100 g product
Amount of C20:1/ fat composition: 14.1 %
Amount of ALA / fat composition: 30.6 %

### Composition data of the olive oil mayonnaise (control):

n-3 fatty acids: 0.6 g/100 g product
n-6 fatty acids: 4.9 g/100 g product
Ratio of n-3 to n-6 fatty acids 0.12:1.0
C20:1 fatty acid 0.16 g/100 g product
Amount of C20:1/fat composition: 0.30 %
Amount of ALA/ fat composition: 1.1 %

During the intervention days, after the test meal, subjects were allowed to drink water, but no caloric drinks or snacks. The dinner on the day before intervention and light breakfast on the day of the intervention were controlled and similar for both intervention days.

Blood samples were taken twice before the meals and at 60, 120, 240 and 360 min after the meals for analysis of triglycerides and apolipoprotein B48. Triglycerides were analysed with standard methods and apolipoprotein B48 with Human Apolipoprotein B-48 ELISA Kit (Shibayagi).

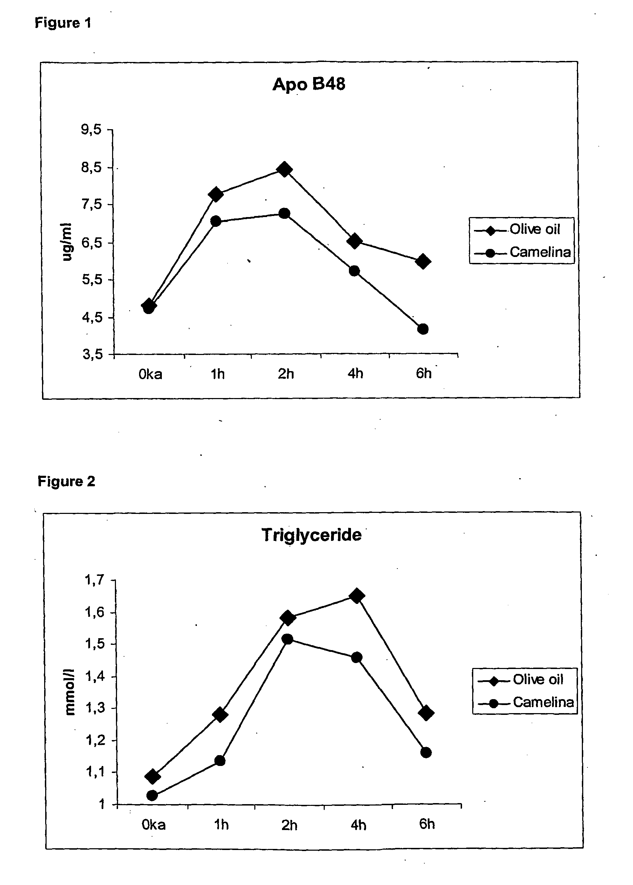

The results are shown in Figure 1 (Apo B48) and Figure 2 (triglyceride). Apo B48 is an apolipoprotein produced by endothelial cells and it is bound to the chylomicron particles. The blood Apo B48 value therefore correlates to the amount of chylomicron particles, which are responsible for the transporting of absorbed triglycerides and cholesterol mainly to the liver. The smaller increase or faster reduction of both Apo B48 and triglyceride levels in the blood after a meal compared to the normal increase in these levels therefore reflects the improved reduction of postprandial lipemia. As clearly shown in the figures the camelina oil mayonnaise is more effective than the reference mayonnaise in clearing the blood from triglycerides.

### Example 9

### Clinical test showing postprandial effects of a fat composition according to the invention

15 healthy young adults (age 20-30 years) with mild hypercholesterolemia (total cholesterol 4.0-6,5 mmol/l) were recruited in a double-blind, randomized, and controlled study where postprandial effects of plant stanol ester with olive oil or with camelina oil were studied. Exclusion criteria for the study were obesity (BMI > 30) and any medication.

After a 3-week use of plant stanol ester (2 g plant stanol equivalents daily in margarine, Benecol®), the subjects ate twice a standard hamburger meal with total fat load 50g in the morning:
- either with plant stanol ester (2 g plant stanol equivalents) and camelina oil (25 g) (Benecol + Camelina)
- or with plant stanol ester (2 g plant stanol equivalents) and olive oil (25 g) (Benecol + olive oil).

### Recipe of the mayonnaises used in the hamburgers (% by weight):

| | |
|---|---|
| 50% | olive oil or camelina oil |
| 6.9 % | plant stanol ester |
| 33.5 % | water |
| 3.0% | sugar |
| 1.2% | salt |
| 0.1 % | potassium sorbate |
| 2.4 % | acetic acid |
| 2.9 % | emulsifiers, spices, vitamins |

### Composition data of the camelina mayonnaise according to the invention:

n-3 fatty acids: 16.2 g/100 g product
n-6 fatty acids: 9.6 g/ 100 g product
Ratio of n-3 to n-6 fatty acids 1.7:1.0
4 g plant stanol equivalents/ 100 g product
C20:1 fatty acid 8.1 g/ 100 g product
Amount of C20:1/ fat composition: 15.4 %
Amount of ALA/ fat composition: 28.7 %

### Composition data of the olive oil mayonnaise (control):

n-3 fatty acids: 0.4 g/100 g product
n-6 fatty acids: 5.0 g/100 g product
Ratio of n-3 to n-6 fatty acids 0.08:1.0
4 g plant stanol equivalents/ 100 g product
C20:1 fatty acid 0.21 g/100 g product
Amount of C20:1/ fat composition: 0.40 %
Amount of ALA/ fat composition: 0.8 %

The two challenges were performed in a randomized order with two weeks interval during which plant stanol ester was still used daily (2 g of plant stanol equivalents, Benecol®).

During the intervention days, after the test meal, subjects were allowed to drink water, but no caloric drinks or snacks. The dinner on the day before intervention and light breakfast on the day of the intervention were controlled and similar for both intervention days.

Blood samples were taken twice before the meals and at 60, 120, 240 and 360 min after the meals for analysis of triglycerides and apolipoprotein B48. Triglycerides were analysed with standard methods and apolipoprotein B48 with Human Apolipoprotein B-48 ELISA Kit (Shibayagi).

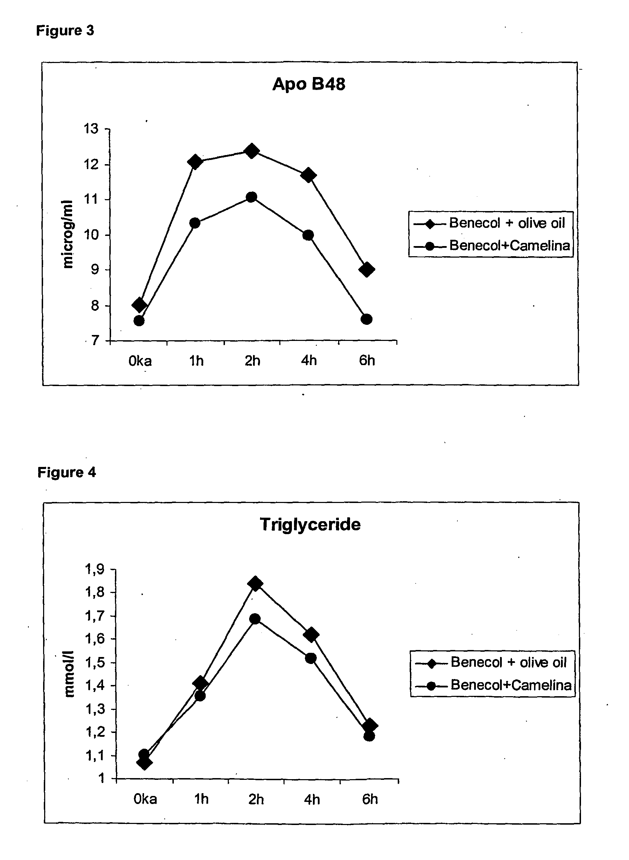

Figure 3 shows the results of the Apo B48 and Figure 4 the triglyceride results. The composition according to the invention is clearly faster reducing the triglyceride level in the blood as shown both by measuring directly the triglycerides and indirectly the Apo B48 level.

## Claims

1. An edible fat composition comprising from 1.5 to 90 % by weight plant sterol and/or stanol calculated as sterol equivalents and from 10 to 98.5 % by weight of an absorbable fat component comprising from 0.05 to 60% by weight eicosenoic acid based on the edible fat composition and a weight ratio of n-3 fatty acids to n-6 fatty acids from 0.6:1 to 5.0:1.

2. The fat composition according to claim 1 comprising at most 10 % by weight, preferably at most 5 % by weight, more preferably at most 3 % by weight, even more preferably at most 1 % by weight marine long chain n-3 fatty acids of the total n-3 fatty acids, and most preferably the fat composition comprises no marine long chain n-3 fatty acids.

3. The fat composition according to any claims 1 or 2, wherein the amount of eicosenoic acid is at least 0.10 %, for example at least 0.15 %, preferably at least 0.20 %, for example at least 0.25 %, more preferably at least 0.30 %, for example at least 0.35 %, even more preferably at least 0.40 %, for example at least 0.50 %, still more preferably at least 0.6 %, for example at least 0.7 %, even still more preferably at least 0.8 %, for example at least 0.9 %, most preferably at least 1.0 %, for example at least 1.5 %, even most preferably at least 2.0 %, for example at least 2.5 %, and still even most preferably at least 3.0 %, for example at least 3.5 %, further more preferably at least 4.0 %, for example at least 4.5 %, and most preferably at least 5.0 % by weight.

4. The fat composition according to any one of claims 1 to 3, wherein the amount of eicosenoic acid is at most 50 %, preferably at most 40 %, more preferably at most 30 %, even more preferably at most 20 %, still more preferably at most 15 % and most preferably at most 10 % by weight.

5. The fat composition according to any one of claims 1 to 4, wherein the amount of alpha-linolenic acid is from 1 to 90 %, preferably from 2 to 80 %, more preferably from 3 to 70 % and most preferably from 4 to 60 % by weight.

6. The fat composition according to any one of claims 1 to 5, wherein at least 50 % by weight, preferably at least 60 % by weight, more preferably at least 70 % by weight, even more preferably at least 80 % by weight, still more preferably at least 90 % by weight and most preferably at least 95 % by weight of the n-3 fatty acids comprises alpha-linolenic acid, and even most preferably the n-3 fatty acids comprise only alpha-linolenic acid.

7. The fat composition according to any one of claims 1 to 6, wherein the absorbable fat component has a weight ratio of n-3 fatty acids to n-6 fatty acids from 0.7:1 to 5.0:1, most preferably from 0.8:1 to 4.5:1 and even most preferably from 0.9:1 to 4.0:1.

8. The fat composition according to any one of claims 1 to 7, wherein the amount of plant sterol and/or stanol is from 1.5 to 65 %, preferably from 2.0 to 60 % by weight, more preferably from 3.0 to 60 % by weight, and most preferably from 5.0 to 50 % by weight.

9. The fat composition according to any one of claims 1 to 8, wherein the n-3 fatty acids of the absorbable fat component comprise at least 60 % by weight, preferably at least 70 % by weight, more preferably at least 80 % by weight, even more preferably at least 90 % by weight and still more preferably at least 95 % by weight of vegetable n-3 fatty acids and most preferably the absorbable fat component comprises only vegetable n-3 fatty acids.

10. The fat composition according to any of claims 1 to 9, wherein at least 95.0 % by weight, preferably at least 96.0 % by weight, more Preferably at least 97.0 % by weight, and most preferably at least 98.0 % by weight of the absorbable fat component comprises fatty acids included in the form of triglycerides and/or plant sterol and/or stanol fatty acid esters.

11. The fat composition according to any of claims 1 to 10, wherein the weight ratio of n-3 fatty acids to plant sterol and/or stanol is 0.08:1-40:1, preferably 0.08:1-6:1, more preferably 0.09:1-5:1, still more preferably 0.1:1-5:1, even more preferably 0.15:1-5:1, still even more preferably 0.2:1-5:1 and most preferably 0.2:1-2:1.

12. The fat composition according to any of claims 1 to 11, wherein at least a part of the eicosenoic acid and at least a part of the n-3 and n-6 fatty acids are provided in the composition as camelina oil.

13. A food product comprising an edible fat composition according to any one of claims 1 to 12 and at least one nutritional component.

14. The food product according to claim 13, wherein it is a beverage, such as a soft drink, and juice, a dairy product, such as milk, cheese, ice cream and yoghurt, a non-dairy product, such as a soy or oat based drink and a product made thereof, a fat based product, such as margarines, spreads, mayonnaise, shortenings, cooking oil and dressing, and a cereal-based product, such as bread, biscuits and pastas.

15. A nutritional supplement or a pharmaceutical product comprising an edible fat composition according to any one of claims 1 to 12.

16. The product according to claim 15 in the form of capsule, preferably a gelatin capsule.

17. An edible fat composition comprising an absorbable fat component composition and n-3 fatty acids and n-6 fatty acids at a weight ratio from 0.6:1 to 5.0:1 for use for reducing postprandial lipemia and/or tor reducing the risk for type 2 diabetes and/or for reducing the risk for cardiovascular diseases and/or for lowering the blood total and/or LDL chotesterol and/or for improving the blood HDL cholesterol and/or for reducing the risk for inflammations.

18. Use of an edible fat composition comprising an absorbable fat component comprising from 0.05 to 60% by weight eicosenoic acid based on the edible fat composition and n-3 fatty acids and n-6 fatty acids at a weight ratio from 0.6:1 to 5.0:1 for preparing a product for reducing postprandial lipemia and/or for reducing the risk for type 2 diabetes and/or for reducing the risk for cardiovascular diseases and/or for lowering the blood total and/or LDL cholesterol and/or for improving the blood HDL cholesterol and/or for reducing the risk for inflammations.

19. The use according to claim 18 wherein the product is a food product, a nutritional supplement or a pharmaceutical product.

## Patentansprüche

1. Eine essbare Fett-Zusammensetzung, umfassend von 1,5 bis 90 Gew.-% Pflanzensterin und/oder stanol, berechnet als Sterinäquivalente, und von 10 bis 98,5 Gew.-% eines absorbierbaren Fettbestandteils, umfassend von 0,05 bis 60 Gew.-% Eicosensäure, basierend auf der essbare Fett-Zusammensetzung, und ein Gewichtsverhältnis von n-3-Fettsäuren zu n-6-Fettsäuren von 0,6 : 1 bis 5,0 : 1.

2. Die Fett-Zusammensetzung nach Anspruch 1, umfassend höchstens 10 Gew.-%, vorzugsweise höchstens 5 Gew.-%, weiter bevorzugt höchstens 3 Gew.-%, weiter bevorzugt höchstens 1 Gew.-%, an langkettigen n-3-Meeresfettsäuren, bezogen auf die gesamten n-3-Fettsäuren, und weiter bevorzugt umfasst die Fett-Zusammensetzung keine langkettigen n-3-Meeresfettsäuren.

3. Die Fett-Zusammensetzung nach einem der Ansprüche 1 bis 2, worin die Menge an Eicosensäure mindestens 0,1 Gew.-%, z.B. mindestens 0,15 Gew.-%, vorzugsweise mindestens 0,20 Gew.-%, z.B. mindestens 0,25 Gew.-%, weiter bevorzugt mindestens 0,30 Gew.-%, z.B. mindestens 0,35 Gew.-%, noch weiter bevorzugt mindestens 0,40 Gew.-%, z.B. mindestens 0,50 Gew.-%, noch weiter bevorzugt mindestens 0,60 Gew.-%, z.B. mindestens 0,70 Gew.-%, noch weiter bevorzugt mindestens 0,80 Gew.-%, z.B. mindestens 0,90 Gew.-%, noch weiter bevorzugt mindestens 1,0 Gew.-%, z.B. mindestens 1,50 Gew.-%, noch weiter bevorzugt mindestens 2,0 Gew.-%, z.B. mindestens 2,50 Gew.-%, noch weiter bevorzugt mindestens 3,0 Gew.-%, z.B. mindestens 3,50 Gew.-%, noch weiter bevorzugt mindestens 4,0 Gew.-%, z.B. mindestens 4,50 Gew.-%, und am meisten bevorzugt mindestens 5,0 Gew.-%, beträgt.

4. Die Fett-Zusammensetzung nach einem der Ansprüche 1 bis 3, worin die Menge an Eicosensäure höchstens 50 Gew.-%, vorzugsweise höchstens 40 Gew.-%, weiter bevorzugt höchstens 30 Gew.-%, noch weiter bevorzugt höchstens 20 Gew.-%, noch weiter bevorzugt höchstens 15 Gew.-% und noch weiter bevorzugt höchstens 10 Gew.-% beträgt.

5. Die Fett-Zusammensetzung nach einem der Ansprüche 1 bis 4, worin die Menge an α-Linolensäure von 1 bis 90 Gew.-%, vorzugsweise von 2 bis 80 Gew.-%, noch weiter bevorzugt von 3 bis 70 Gew.-% und noch weiter bevorzugt von 4 bis 60 Gew.-% beträgt.

6. Die Fett-Zusammensetzung nach einem der Ansprüche 1 bis 5, in welcher mindestens 50 Gew.-%, vorzugsweise mindestens 60 Gew.-%, weiter bevorzugt mindestens 70 Gew.-%, noch weiter bevorzugt mindestens 80 Gew.-%, noch weiter bevorzugt mindestens 90 Gew.-% und am bevorzugtesten mindestens 95 Gew.-% der n-3-Fettsäuren α-Linolensäure entsprechen und noch weiter bevorzugt die n-3-Fettsäuren nur α-Linolensäure umfassen.

7. Die Fett-Zusammensetzung nach einem der Ansprüche 1 bis 6, worin die absorbierbare Fett-Zusammensetzung ein Gewichtsverhältnis der n-3-Fettsäuren zu den n-6-Fettsäuren von 0,7 : 1 bis 5,0 : 1, weiter bevorzugt von 0,8 : 1 bis 4,5 : 1 und noch weiter bevorzugt von 0,9 : 1 bis 4,0 : 1 aufweist.

8. Die Fett-Zusammensetzung nach einem der Ansprüche 1 bis 7, worin die Menge an Pflanzensterin und/oder -stanol von 1,5 bis 65 Gew.-%, vorzugsweise von 2,0 bis 60 Gew.-%, weiter bevorzugt von 3,0 bis 60 Gew.-% und noch weiter bevorzugt von 5,0 bis 50 Gew.-% beträgt.

9. Die Fett-Zusammensetzung nach einem der Ansprüche 1 bis 8, worin die n-3-Fettsäuren des absorbierbaren Fettbestandteils mindestens 60 Gew.-%, vorzugsweise mindestens 70 Gew.-%, weiter bevorzugt mindestens 80 Gew.-%, weiter bevorzugt mindestens 90 Gew.-% und noch weiter bevorzugt mindestens 95 Gew.-% pflanzlichen n-3-Fettsäuren entsprechen und noch weiter bevorzugt der absorbierbare Fettbestandteil nur pflanzliche n-3-Fettsäuren umfasst.

10. Die Fett-Zusammensetzung nach einem der Ansprüche 1 bis 9, in welcher mindestens 95 Gew.-%, bevorzugt mindestens 96 Gew.-%, weiter bevorzugt mindestens 97 Gew.-%, und noch weiter bevorzugt mindestens 98 Gew.-%, des absorbierbaren Fettbestandteils Fettsäuren umfasst, welche in der Form von Triglyceriden und/oder pflanzlichen Sterin- und/oder Stanol-Fettsäureestern vorliegen.

11. Die Fett-Zusammensetzung nach einem der Ansprüche 1 bis 10, worin das Gewichtsverhältnis der n-3-Fettsäuren zu dem pflanzlichen Sterin und/oder Stanol gleich 0,08 : 1 bis 40 : 1, bevorzugt 0,08 : 1 bis 6 : 1 , weiter bevorzugt 0,09 : 1 bis 5 : 1, noch weiter bevorzugt 0,01 : 1 bis 5 : 1, noch weiter bevorzugt 0,15 : 1 bis 5 : 1, noch weiter bevorzugt 0,02 : 1 bis 5 : 1 und noch weiter bevorzugt 0,2 : 1 bis 2 : 1 beträgt.

12. Die Fett-Zusammensetzung nach einem der Ansprüche 1 bis 1 1 , worin mindestens ein Teil der Eicosensäure und mindestens ein Teil der n-3- und n-6-Fettsäuren in der Zusammensetzung als Camelinaöl vorliegen.

13. Ein Nahrungsmittelprodukt, umfassend die essbare Fett-Zusammensetzung nach einem der Ansprüche 1 bis 12 und mindestens einen ernährungswirksamen Bestandteil.

14. Das Nahrungsmittelprodukt nach Anspruch 13, welches ausgebildet ist als Getränk, wie einem Softdrink und einem Saft; einem Milchprodukt, wie Milch, Käse, Eiscreme und Joghurt; ein Nicht-Milchprodukt, wie einem Getränk auf Basis von Soja oder Hafer; und einem Produkt, welches daraus hergestellt wird; ein fettbasierendes Produkt, wie Margarine, Aufstrich, Mayonnaise, Butter, Speiseöl und Dressing und einem Produkt auf Basis von Cerealien, wie Brot, Biskuit und Nudeln.

15. Eine Nahrungsmittelergänzung oder ein pharmazeutisches Produkt, umfassend eine essbare Fett-Zusammensetzung nach einem der Ansprüche 1 bis 12.

16. Das Produkt nach Anspruch 15 in der Form einer Kapsel, vorzugsweise einer Gelatinekapsel.

17. Eine essbare Fett-Zusammensetzung, umfassend einen absorbierbaren Fettbestandteil, umfassend von 0,05 bis 60 Gew.-%, basierend auf der essbaren Fett-Zusammensetzung an Eicosensäure und n-3-Fettsäuren und n-6-Fettsäuren in einem Gewichtsverhältnis von 0,6 : 1 bis 5,0 : 1 für die Verwendung zur Reduzierung der postprandialen Lipämie und/oder zur Reduzierung des Risikos von Typ-2-Diabetes und/oder für die Reduzierung des Risikos von kardiovaskulären Erkrankungen und/oder zur Erniedrigung des Blutdrucks und/oder des LDL-Cholesterols und/oder zur Verbesserung des Blut-HDL-Cholesterols und/oder zur Reduzierung des Risikos von Entzündungen.

18. Verwendung einer essbare Fett-Zusammensetzung, umfassend einen absorbierbaren Fettbestandteil, umfassend von 0,05 bis 60 Gew.-%, basierend auf der essbaren Fett-Zusammensetzung an Eicosensäure, und n-3-Fettsäuren und n-6-Fettsäuren in einem Gewichtsverhältnis von 0,6 : 1 bis 5,0 : 1 zur Herstellung eines Produkt für die Verwendung zur Reduzierung der postprandialen Lipämie und/oder zur Reduzierung des Risikos von Typ-2-Diabetes und/oder für die Reduzierung des Risikos von kardiovaskulären Erkrankungen und/oder zur Erniedrigung des Blutdrucks und/oder des LDL-Cholesterols und/oder zur Verbesserung des Blut-HDL-Cholesterols und/oder zur Reduzierung des Risikos von Entzündungen.

19. Die Verwendung nach Anspruch 18, worin das Produkt ein Nahrungsmittel, ein Nahrungsergänzungsmittel oder ein pharmazeutisches Produkt ist.

## Revendications

1. Composition de graisse comestible comprenant de 1,5 à 90 % en poids de stérol et/ou de stanol végétal calculés en tant qu'équivalents de stérol et de 10 à 98,5 % en poids d'un composant de graisse absorbable comprenant de 0,05 à 60 % en poids d'acide eicosénoïque par rapport à la composition de graisse comestible et un rapport en poids entre les acides gras n-3 et les acides gras n-6 de 0,6 : 1 à 5,0 : 1.

2. Composition de graisse selon la revendication 1, comprenant au plus 10 % en poids, de préférence au plus 5 % en poids, de manière davantage préférée au plus 3 % en poids, de manière encore davantage préférée au plus 1 % en poids d'acides gras n-3 à longue chaîne marins des acides gras n-3 totaux, et de manière préférée entre toutes la composition de graisse ne comprend pas d'acides gras n-3 à longue chaîne marins.

3. Composition de graisse selon l'une quelconque des revendications 1 ou 2, dans laquelle la quantité d'acide eicosénoïque est d'au moins 0,10 %, par exemple au moins 0,15 %, de préférence au moins 0,20 %, par exemple au moins 0,25%, de manière davantage préférée au moins 0,30 %, par exemple au moins 0,35 %, de manière encore davantage préférée au moins 0,40 %, par exemple au moins 0,50 %, de manière encore davantage préférée au moins 0,6 %, par exemple au moins 0,7 %, de manière encore davantage préférée au moins 0,8 %, par exemple au moins 0,9 %, de manière préférée entre toutes au moins 1,0 %, par exemple au moins 1,5 %, encore de manière préférée entre toutes au moins 2,0 %, par exemple au moins 2,5 %, et toujours encore de manière préférée entre toutes au moins 3,0 %, par exemple au moins 3,5 %, de manière encore davantage préférée au moins 4,0 %, par exemple au moins 4,5 %, et de manière préférée entre toutes au moins 5,0 % en poids.

4. Composition de graisse selon l'une quelconque des revendications 1 à 3, dans laquelle la quantité d'acide eicosénoïque est d'au plus 50 %, de préférence au plus 40 %, de manière davantage préférée au plus 30 %, de manière encore davantage préférée au plus 20 %, de manière encore davantage préférée au plus 15 % et de manière préférée entre toutes au plus 10 % en poids.

5. Composition de graisse selon l'une quelconque des revendications 1 à 4, dans laquelle la quantité d'acide alpha-linolénique est de 1 à 90 %, de préférence de 2 à 80 %, de manière davantage préférée de 3 à 70 % et de manière préférée entre toutes de 4 à 60 % en poids.

6. Composition de graisse selon l'une quelconque des revendications 1 à 5, dans laquelle au moins 50 % en poids, de préférence au moins 60 % en poids, de manière davantage préférée au moins 70 % en poids, de manière encore davantage préférée au moins 80 % en poids, de manière encore davantage préférée au moins 90 % en poids et de manière préférée entre toutes au moins 95 % en poids des acides gras n-3 comprend de l'acide alpha-linolénique, et encore de manière préférée entre toutes, les acides gras n-3 ne comprennent que de l'acide alpha-linolénique.

7. Composition de graisse selon l'une quelconque des revendications 1 à 6, dans laquelle le composant de graisse absorbable a un rapport en poids entre les acides gras n-3 et les acides gras n-6 de 0,7 : 1 à 5,0 : 1, de manière préférée entre toutes de 0,8 : 1 à 4,5 : 1 et encore de manière préférée entre toutes de 0,9 : 1 à 4,0:1.

8. Composition de graisse selon l'une quelconque des revendications 1 à 7, dans laquelle la quantité de stérol et/ou de stanol végétal est de 1,5 à 65 %, de préférence de 2,0 à 60 % en poids, de manière davantage préférée de 3,0 à 60 % en poids, et de manière préférée entre toutes de 5,0 à 50 % en poids.

9. Composition de graisse selon l'une quelconque des revendications 1 à 8, dans laquelle les acides gras n-3 du composant de graisse absorbable comprennent au moins 60 % en poids, de préférence au moins 70 % en poids, de manière davantage préférée au moins 80 % en poids, de manière encore davantage préférée au moins 90 % en poids, et de manière encore davantage préférée au moins 95 % en poids d'acides gras n-3 végétaux et de manière préférée entre toutes le composant de graisse absorbable ne comprend que des acides gras n-3 végétaux.

10. Composition de graisse selon l'une quelconque des revendications 1 à 9, dans laquelle au moins 95,0 % en poids, de préférence au moins 96,0 % en poids, de manière davantage préférée au moins 97,0 % en poids, et de manière préférée entre toutes au moins 98,0 % en poids du composant de graisse absorbable comprend des acides gras inclus sous la forme de triglycérides et/ou d'esters d'acides gras de stérol et/ou stanol végétal.

11. Composition de graisse selon l'une quelconque des revendications 1 à 10, dans laquelle le rapport en poids entre les acides gras n-3 et le stérol et/ou stanol végétal est de 0,08 : 1 à 40 : 1, de préférence de 0,08 : 1 à 6 : 1, de manière davantage préférée de 0,09 : 1 à 5 : 1, de manière encore davantage préférée de 0,1 : 1 à 5 : 1, de manière encore davantage préférée de 0,15 : 1 à 5 : 1, de manière encore davantage préférée de 0,2 : 1 à 5 : 1 et de manière préférée entre toutes de 0,2 : 1 à 2:1.

12. Composition de graisse selon l'une quelconque des revendications 1 à 11, dans laquelle au moins une partie de l'acide eicosénoïque et au moins une partie des acides gras n-3 et n-6 sont fournies dans la composition sous forme d'huile de cameline.

13. Produit alimentaire comprenant une composition de graisse comestible selon l'une quelconque des revendications 1 à 12, et au moins un composant nutritionnel.

14. Produit alimentaire selon la revendication 13, s'agissant d'une boisson, telle qu'une boisson non alcoolisée, et un jus, un produit laitier, tel que du lait, du fromage, une crème glacée et un yaourt, un produit non laitier, tel qu'une boisson à base de soja ou d'avoine et un produit préparé à partir de ces derniers, un produit à base de graisse, tel que des margarines, des pâtes à tartiner, de la mayonnaise, des matières grasses, de l'huile de cuisson et une sauce pour salade, et un produit à base de céréales, tel que du pain, des biscuits et des pâtes.

15. Complément nutritionnel ou produit pharmaceutique comprenant une composition de graisse comestible selon l'une quelconque des revendications 1 à 12.

16. Produit selon la revendication 15, sous la forme d'une capsule, de préférence une gélule.

17. Composition de graisse comestible comprenant un composant de graisse absorbable comprenant de 0,05 à 60 % en poids d'acide eicosénoïque par rapport à la composition de graisse comestible et des acides gras n-3 et des acides gras n-6 à un rapport en poids de 0,6 : 1 à 5,0 : 1 pour son utilisation pour réduire la lipémie post-prandiale et/ou pour réduire le risque de diabète de type 2 et/ou pour réduire le risque de maladies cardiovasculaires et/ou pour abaisser le cholestérol total et/ou LDL dans le sang et/ou pour améliorer le cholestérol HDL dans le sang et/ou pour réduire le risque d'inflammations.

18. Utilisation d'une composition de graisse comestible comprenant un composant de graisse absorbable comprenant de 0,05 à 60 % en poids d'acide eicosénoïque par rapport à la composition de graisse comestible et des acides gras n-3 et des acides gras n-6 à un rapport en poids de 0,6 : 1 à 5,0 : 1 pour préparer un produit destiné à réduire la lipémie post-prandiale et/ou pour réduire le risque de diabète de type 2 et/ou pour réduire le risque de maladies cardiovasculaires et/ou pour abaisser le cholestérol total et/ou LDL dans le sang et/ou pour améliorer le cholestérol HDL dans le sang et/ou pour réduire le risque d'inflammations.

19. Utilisation selon la revendication 18, dans laquelle le produit est un produit alimentaire, un complément nutritionnel ou un produit pharmaceutique.
